# FASCICULE DE BREVET EUROPEEN

(11) **EP 4 260 210 B1**
(45) Date de publication et mention de la délivrance du brevet: **18.11.2026**
(21) Numéro de dépôt: 21848165.3
(22) Date de dépôt: 02.12.2021
(51) Int. Cl.: G06F 21/31, H04L 9/40

(54) **PROCÉDÉ DE GESTION DE L'AUTHENTIFICATION D'UN UTILISATEUR D'UN DISPOSITIF SUR UN ÉQUIPEMENT PAR MOT DE PASSE**
VERWALTUNGSVERFAHREN ZUR AUTHENTIFIZIERUNG EINES BENUTZERS EINER VORRICHTUNG AUF EINEM GERÄTEELEMENT DURCH PASSWORT
MANAGEMENT METHOD FOR AUTHENTICATING A USER OF A DEVICE ON AN EQUIPMENT ITEM BY PASSWORD

(30) Priorité: 10.12.2020 FR 2012981
(43) Date de publication de la demande: 18.10.2023
(73) Titulaire: Orange, 92130 Issy-les-Moulineaux (FR)
(72) Inventeur: CHARLES, Olivier, 92326 Châtillon Cedex (FR); NOURRY, Pascal, 92326 Châtillon Cedex (FR)
(86) Numéro de dépôt international: PCT/FR2021/052190
(87) Numéro de publication internationale: WO 2022/123152

(56) Documents cités:
- US-A1- 2015 154 595
- US-A1- 2017 017 957
- US-A1- 2017 330 184

## Description

### Domaine technique

Le domaine technique est celui de l'authentification d'utilisateur par un mot de passe.

Plus précisément, l'invention se rapporte à un procédé de gestion de l'authentification d'un utilisateur d'un dispositif sur un équipement par un mot de passe.

Les équipements dont il est question sont d'abord ceux qui constituent les infrastructures dans le domaine des télécommunications, par exemple les routeurs des réseaux de collecte IP, ou bien les équipements implémentant les protocoles SDH sans se limiter à ceux-ci. L'invention s'applique tout particulièrement aux infrastructures du domaine des télécommunications, mais peut s'appliquer à toute infrastructure qui est constituée d'un parc d'équipements dont l'accès est contrôlé par un mot de passe.

Ces équipements sont généralement répartis sur l'ensemble du territoire. Ils sont en général connectés par un réseau de communication qui permet de les administrer à distance. Cette connexion permet par exemple de changer le mot de passe qui permet d'accéder à l'équipement.

Le dispositif visé ci-dessus va être par exemple un ordinateur portable, ou bien une tablette tactile, ou bien un ordiphone. Le dispositif est mis à disposition d'un utilisateur. Il comprendra dans tous les cas un processeur lui permettant de réaliser certains calculs.

### Etat de la technique

Les infrastructures dans le domaine des télécommunications, mais aussi dans le domaine de la distribution d'eau, ou bien de la distribution d'électricité, sont constituées de vastes parcs d'équipements distribués sur le territoire. Les équipements formant ces infrastructures disposent très souvent d'un système de contrôle d'accès s'appuyant sur un mot de passe. Ces équipements disposent en général d'un compte permettant de les administrer, l'accès à ce compte étant protégé par un mot de passe. Le plus souvent, chaque équipement ne dispose que d'un compte d'administration et plus rarement de deux ou trois au maximum. Dans le contexte de l'invention, on peut considérer des équipements disposant d'un seul compte d'administration et donc que l'accès à l'équipement ne se fait que grâce à un seul mot de passe.

L'utilisateur qui s'authentifie sur l'équipement est en général un technicien de maintenance qui doit s'authentifier afin de réaliser tous types d'opérations possibles, par exemple des opérations de maintenance courante (vérification du bon fonctionnement), ou bien des opérations d'administration (changement de mot de passe, changement de version logicielle) ou bien des opérations de dépannage (relance de certains composants logiciels). L'authentification sur l'équipement est restreinte par un mot de passe afin de protéger l'accès à ces opérations uniquement aux utilisateurs légitimes.

L'utilisateur, technicien en charge de la maintenance, doit pouvoir s'authentifier sur l'équipement lors d'opérations de maintenance, d'administration ou de dépannage qui sont réalisées directement sur l'équipement, et non à distance. Cette authentification doit pouvoir être assurée même en cas de panne du réseau de communication.

Les utilisateurs, techniciens en charge de la maintenance des équipements, doivent donc connaître les mots de passe pour l'ensemble des équipements dont ils s'occupent. Pour des raisons de praticité évidentes, il arrive souvent qu'un seul mot de passe soit donné à l'ensemble des équipements du parc. De cette manière, les techniciens ne doivent plus mémoriser qu'un seul mot de passe.

Cette situation présente un risque de sécurité clair. En effet, la connaissance par un attaquant du mot de passe d'un seul équipement lui donnerait accès à l'ensemble des équipements du parc, ce qui lui permettrait de faire des dégâts beaucoup plus forts. Pour des raisons de sécurité, on va donc chercher à distribuer des mots de passe diversifiés sur le parc d'équipements, dans l'idéal un pour chaque équipement. Cette distribution de secrets diversifiés doit cependant se faire en restant pratique pour les techniciens en charge de la maintenance.

La manière classique de distribuer des mots de passe diversifiés, tout en restant pratique pour les utilisateurs qui doivent connaître les mots de passe, est un système dit d'OTP (One Time Password). Dans ce type de système, un appareil que l'utilisateur possède génère un nouveau mot de passe régulièrement. Une plate-forme centrale injecte le même mot de passe dans les services auxquels l'utilisateur pourra accéder, de façon synchronisée avec la génération du mot de passe.

Un système d'OTP n'est pas adapté pour distribuer des mots de passe diversifiés dans des vastes parcs d'équipements pour deux raisons.

Premièrement, les systèmes d'OTP sont utilisés dans les cas où l'on se trouve avec un grand nombre d'utilisateurs du système face à un nombre limité de services auxquels les utilisateurs accèdent par mot de passe. Dans le cas des parcs d'équipements, on se trouve au contraire dans une situation où un petit nombre d'utilisateurs (quelques dizaines de techniciens) doit accéder par mot de passe à un grand nombre d'équipements (quelques milliers d'équipements).

Deuxièmement, un système d'OTP nécessite que les services accédés par les utilisateurs disposent d'une connexion réseau pour que la plate-forme centrale injecte régulièrement les mots de passe des utilisateurs. Or, dans le cas des réseaux de télécommunications, les interventions de techniciens se font souvent lors de panne du réseau. Dans ce cas, on ne peut pas compter sur la disponibilité d'un réseau de télécommunications. Plus généralement, les équipements de distribution d'électricité et d'eau peuvent se trouver dans des régions isolées, là encore sans accès réseau permanent.

L'utilisation d'un système d'OTP ne résout donc pas le problème de distribuer des mots de passe diversifiés dans un vaste parc d'équipements qui ne dispose pas d'un accès fiable à un réseau de communication.

**La demande** de brevet publiée sous le numéro US 2017/0017957 A1 décrit un système de paiement utilisant un mécanisme d'authentification à deux facteurs. Cette demande fait partie de l'état de la technique.

La demande de brevet publiée sous le numéro US 2015/015495 A1 décrit une méthode et un système pour l'authentification d'un dispositif sans utiliser des éléments sécurisés. La demande de brevet publiée sous le numéro US 2017/0330184 A1 décrit un procédé pour sécuriser des transactions sans contact. Ces deux demandes font partie de l'arrière-plan technologique.

L'invention vient améliorer la situation.

### L'invention

Selon un premier aspect fonctionnel, l'invention a trait à un procédé de gestion de l'authentification d'un utilisateur d'un dispositif sur un équipement, l'équipement étant accédé par mot de passe, ledit procédé étant caractérisé en ce qu'il comprend les phases suivantes :
une phase d'obtention d'un premier mot de passe par l'équipement via un réseau de communication, le mot de passe étant le résultat d'un calcul à partir d'une première donnée secrète ;
une phase d'accès de l'utilisateur à l'équipement, qui comprend :
   ∘ une étape de réception par l'équipement d'un deuxième mot de passe calculé par le dispositif à partir d'une deuxième donnée secrète, la valeur de la deuxième donnée secrète étant choisie par le dispositif, en cas de coupure du réseau de communication, selon la durée de la coupure pour correspondre à la valeur utilisée pour calculer le mot de passe obtenu par l'équipement en dernier ;
   ∘ une étape d'authentification de l'utilisateur du dispositif sur l'équipement si le deuxième mot de passe reçu lors de l'étape de réception correspond au premier mot de passe obtenu lors de la phase d'obtention.

Grâce à l'invention, l'utilisateur ne doit plus mémoriser le mot de passe qui lui permet d'être authentifié par l'équipement. C'est le dispositif dont est muni l'utilisateur qui calcule le mot de passe en question.

De plus, grâce à l'invention, le mot de passe est calculé à partir d'une donnée secrète. Un attaquant qui ne connaîtrait pas la donnée secrète ne pourrait donc pas retrouver le mot de passe uniquement à partir de la connaissance du processus de calcul.

A noter que la phase d'obtention d'un premier mot de passe peut être réalisée indépendamment de la phase d'accès. De préférence, comme on le verra dans les exemples décrits ci-dessous, cette phase d'obtention d'un premier mot de passe précèdera la phase d'accès.

Selon encore un premier mode de mise en œuvre particulier de l'invention, la première donnée secrète utilisée lors de la phase d'obtention varie dans le temps, et la deuxième donnée secrète est mise à jour sur le dispositif pour être synchrone avec la première donnée secrète.

Grâce à ce premier mode, le mot de passe permettant d'accéder à l'équipement va changer dans le temps, ce qui diminue le risque qu'un attaquant finisse par obtenir le bon mot de passe. Pour que l'utilisateur du dispositif puisse s'authentifier, il faut que la donnée secrète soit régulièrement mise à jour, afin que le mot de passe calculé par le dispositif soit le même que celui obtenu par l'équipement.

Selon un deuxième mode de mise en œuvre particulier de l'invention, qui pourra être mis en œuvre alternativement ou cumulativement avec le précédent mode, des valeurs de mot de passe sont reçues successivement par l'équipement jusqu'à ce que l'étape d'authentification réussisse.

Dans ce deuxième mode de réalisation, le dispositif mémorise les valeurs successives de la donnée secrète utilisée pour calculer le mot de passe. Il est possible que l'équipement n'ait pas pu obtenir le mot de passe calculé avec la valeur la plus récente de la donnée secrète, par exemple parce que le réseau de communication qui permet à l'équipement d'obtenir le mot de passe est en panne. Dans ce cas, le dispositif va d'abord calculer le mot de passe à partir de la valeur la plus récente de la donnée secrète. En cas d'échec de l'authentification sur l'équipement avec ce mot de passe, le dispositif va calculer itérativement d'autres mots de passe en utilisant des valeurs plus anciennes de la donnée secrète, jusqu'à ce que l'authentification sur l'équipement réussisse avec un mot de passe calculé. Le dispositif utilisera par exemple pour ces calculs les valeurs de la donnée secrète en partant de la plus récente et en itérant jusqu'à la plus ancienne. Grâce à ce mode de mise en œuvre particulier de l'invention, la capacité pour l'utilisateur de s'authentifier résiste à des pannes du réseau de communication qui empêchent l'équipement d'obtenir une valeur la plus à jour de la donnée secrète.

Selon un troisième mode de mise en œuvre particulier de l'invention, qui pourra être mis en œuvre alternativement ou cumulativement avec les précédents modes, la phase d'obtention s'effectue via un réseau de communication, et, en cas de coupure du réseau de communication, la valeur de la deuxième donnée secrète choisie par le dispositif dépend de la durée de la coupure pour correspondre à la valeur utilisée pour calculer le mot de passe obtenu par l'équipement en dernier.

Grâce à ce mode de mise en œuvre particulier de l'invention, la capacité pour l'utilisateur de s'authentifier même en présence de pannes du réseau de communication est améliorée.

Selon un quatrième mode de mise en œuvre particulier de l'invention, qui pourra être mis en œuvre cumulativement avec les modes précédents, l'équipement appartient à un parc d'équipements, les équipements disposant d'un identifiant unique. Dans cette configuration, le mot de passe obtenu par l'équipement est calculé par un serveur à partir de l'identifiant unique et d'une donnée secrète en utilisant une fonction cryptographique, et la phase d'accès de l'utilisateur à l'équipement comprend une étape préalable de fourniture au cours de laquelle l'équipement fournit son identifiant unique au dispositif.

Une fonction cryptographique permet de garantir que le mot de passe résultat du calcul sera différent à chaque fois qu'un identifiant différent est utilisé et également qu'il est impossible à un attaquant de découvrir le mot de passe sans connaître la donnée secrète. Grâce à ce mode de mise en œuvre, l'invention permet de distribuer des mots de passe diversifiés, qui sont différents pour chaque équipement à l'intérieur du parc. De plus, grâce à ce mode de mise en œuvre et à la nature d'une fonction cryptographique, un attaquant qui connaîtrait seulement l'identifiant de l'équipement et le processus de calcul, mais pas la donnée secrète, ne pourrait pas trouver le mot de passe résultat du calcul.

Selon un deuxième aspect fonctionnel, l'invention a trait à un procédé d'accès à un équipement par un dispositif, ledit équipement nécessitant un mot de passe pour son accès, ledit premier mot de passe ayant été calculé à partir d'une première donnée secrète et obtenu via un réseau de communication, ledit procédé d'accès comprenant :
une étape de calcul par le dispositif d'un deuxième mot de passe à partir d'une deuxième donnée secrète, la valeur de la deuxième donnée secrète étant choisie par le dispositif, en cas de coupure du réseau de communication, selon la durée de la coupure pour correspondre à la valeur utilisée pour calculer le premier mot de passe obtenu par l'équipement en dernier ;
une étape de transmission du deuxième mot de passe par le dispositif à l'équipement.

Grâce à cet aspect de l'invention, l'utilisateur n'a plus à mémoriser le mot de passe qui lui permettra d'être authentifié sur l'équipement. C'est le dispositif de l'utilisateur qui va calculer le mot de passe qui va lui permettre de s'authentifier.

Selon un premier mode de mise en œuvre de ce deuxième aspect de l'invention, la deuxième donnée secrète est mise à jour sur le dispositif au fil du temps pour être synchrone avec la première donnée secrète utilisée par l'équipement.

Grâce à ce premier mode, la donnée secrète présente dans le dispositif est régulièrement mise à jour, afin de s'assurer que la valeur de la donnée secrète qui a été utilisée pour calculer le mot de passe de l'équipement est bien présente dans le dispositif. De cette manière, le mot de passe de l'équipement peut changer dans le temps, ce qui diminue le risque qu'un attaquant finisse par obtenir le bon mot de passe, tout en permettant que l'utilisateur du dispositif puisse s'authentifier.

Selon un deuxième mode de mise en œuvre particulier de ce deuxième aspect de l'invention, qui pourra être mis en œuvre alternativement ou cumulativement avec le précédent mode, le dispositif mémorise plusieurs valeurs passées de la deuxième donnée secrète, et le calcul du mot de passe par le dispositif se base sur l'une de ces valeurs.

Dans ce mode de mise en œuvre, le dispositif mémorise les valeurs successives de la donnée secrète utilisée pour calculer le mot de passe. En effet, comme indiqué précédemment, il est possible que l'équipement n'ait pas pu obtenir le mot de passe calculé avec la valeur la plus récente de la donnée secrète, par exemple parce que le réseau de communication qui permet à l'équipement d'obtenir le mot de passe est en panne. Dans ce cas, le dispositif va d'abord calculer le mot de passe à partir de la valeur la plus récente de la donnée secrète, puis, en cas d'échec de l'authentification, le dispositif va utiliser des valeurs de plus en plus anciennes, jusqu'à ce que l'authentification réussisse. Grâce à ce mode de mise en œuvre particulier de l'invention, la capacité pour l'utilisateur de s'authentifier résiste à des pannes du réseau de communication qui empêchent l'équipement d'obtenir une valeur la plus à jour de la donnée secrète, car le dispositif conserve en mémoire les valeurs passées de la donnée secrète.

Selon un troisième mode de mise en œuvre particulier de cet aspect de l'invention, l'équipement accédé par le dispositif obtient le premier mot de passe via un réseau de communications et, en cas de coupure du réseau de communication, la valeur de la deuxième donnée secrète choisie par le dispositif dépend de la durée de la coupure pour correspondre à la valeur utilisée pour calculer le premier mot de passe de l'équipement en dernier.

Grâce à ce mode de mise en œuvre particulier de l'invention, la capacité pour l'utilisateur de s'authentifier même en présence de pannes du réseau de communication est améliorée.

Selon un quatrième mode de mise en œuvre particulier de cet aspect de l'invention, l'équipement accédé par le dispositif appartient à un parc d'équipements, les équipements disposant d'un identifiant unique, et le premier mot de passe obtenu par l'équipement accédé par le dispositif est calculé par un serveur à partir de l'identifiant unique et d'une première donnée secrète en utilisant une fonction cryptographique. Dans ce mode particulier, la phase d'accès de l'utilisateur du dispositif à l'équipement comprend une étape préalable de fourniture au cours de laquelle l'équipement fournit son identifiant unique au dispositif et le dispositif calcule le deuxième mot de passe à partir de l'identifiant unique et d'une deuxième donnée secrète en utilisant la même fonction cryptographique.

Grâce à ce mode de mise en œuvre, le dispositif va calculer des mots de passe diversifiés, qui sont différents pour chaque équipement à l'intérieur du parc. De plus, grâce à ce mode de mise en œuvre et à la nature d'une fonction cryptographique, un attaquant qui connaîtrait seulement l'identifiant de l'équipement et le processus de calcul, mais pas la donnée secrète, ne pourrait pas trouver le mot de passe résultat du calcul.

Selon un premier aspect matériel, l'invention se rapporte à un équipement gérant l'authentification d'un utilisateur d'un dispositif, l'équipement étant accédé par mot de passe, caractérisé en ce que l'équipement comprend :
un module d'obtention d'un premier mot de passe via un réseau de communication, le mot de passe étant le résultat d'un calcul à partir d'une première donnée secrète ;
un module de réception apte à recevoir un deuxième mot de passe calculé par le dispositif à partir d'une deuxième donnée secrète, la valeur de la deuxième donnée secrète étant choisie par le dispositif, en cas de coupure du réseau de communication, selon la durée de la coupure pour correspondre à la valeur utilisée pour calculer le mot de passe obtenu par l'équipement en dernier ;
un module d'authentification apte à authentifier l'utilisateur du dispositif sur l'équipement si le premier mot de passe obtenu correspond au deuxième mot de passe reçu.

Selon un mode de mise en œuvre particulier de ce premier aspect matériel, l'équipement appartient à un parc d'équipements et est muni d'un identifiant unique et comprend de surcroît un module de fourniture apte à fournir l'identifiant unique au dispositif.

Selon un deuxième aspect matériel, l'invention se rapporte à un dispositif permettant l'accès d'un utilisateur sur un équipement, ledit équipement nécessitant un mot de passe pour son accès, ledit premier mot de passe ayant été calculé à partir d'une première donnée secrète et obtenu via un réseau de communication, ledit dispositif étant caractérisé en ce qu'il comprend :
un module de calcul par le dispositif d'un deuxième mot de passe à partir d'une deuxième donnée secrète, la valeur de la deuxième donnée secrète étant choisie par le dispositif, en cas de coupure du réseau de communication, selon la durée de la coupure pour correspondre à la valeur utilisée pour calculer le premier mot de passe obtenu par l'équipement en dernier ;
un module de transmission du deuxième mot de passe par le dispositif à l'équipement.

Selon un mode de mise en œuvre particulier de ce deuxième aspect matériel, le dispositif comprend de surcroît un module de réception apte à recevoir un identifiant d'un équipement, et le module de calcul du dispositif calcule le deuxième mot de passe à partir de l'identifiant et d'une deuxième donnée secrète.

Selon un autre aspect matériel, l'invention a trait à un programme d'ordinateur apte à être mis en œuvre par un équipement, le programme comprenant des instructions de code qui, lorsqu'il est exécuté par un processeur, réalise les étapes du procédé de gestion défini ci-dessus.

Selon un autre aspect matériel, l'invention a trait à un programme d'ordinateur apte à être mis en œuvre par un dispositif, le programme comprenant des instructions de code qui, lorsqu'il est exécuté par un processeur, réalise les étapes du procédé d'accès défini ci-dessus.

Enfin, selon un autre aspect matériel, l'invention a trait à des supports de données sur lesquels sont enregistrés des programmes d'ordinateurs comprenant des séquences d'instructions pour la mise en œuvre des procédés de gestion et d'accès définis ci-dessus.

Les supports de données peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique tel qu'un un disque dur. D'autre part, les supports peuvent être des supports transmissibles tels qu'un signal électrique ou optique, qui peuvent être acheminés via un câble électrique ou optique, par radio ou par d'autres moyens. Les programmes selon l'invention peuvent être en particulier téléchargés sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple, et faite en référence aux dessins annexées sur lesquels :
La figure 1 représente un système composé d'un équipement et d'un utilisateur muni d'un dispositif sur lequel est illustré un exemple de réalisation de l'invention.
La figure 2 illustre un exemple d'étapes mises en œuvre dans le cadre d'un mode de réalisation de l'invention.
La figure 3 illustre un autre exemple d'étapes mises en œuvre dans le cadre d'un autre mode de réalisation de l'invention.

### Description détaillée d'un ou plusieurs exemples de réalisation de l'invention

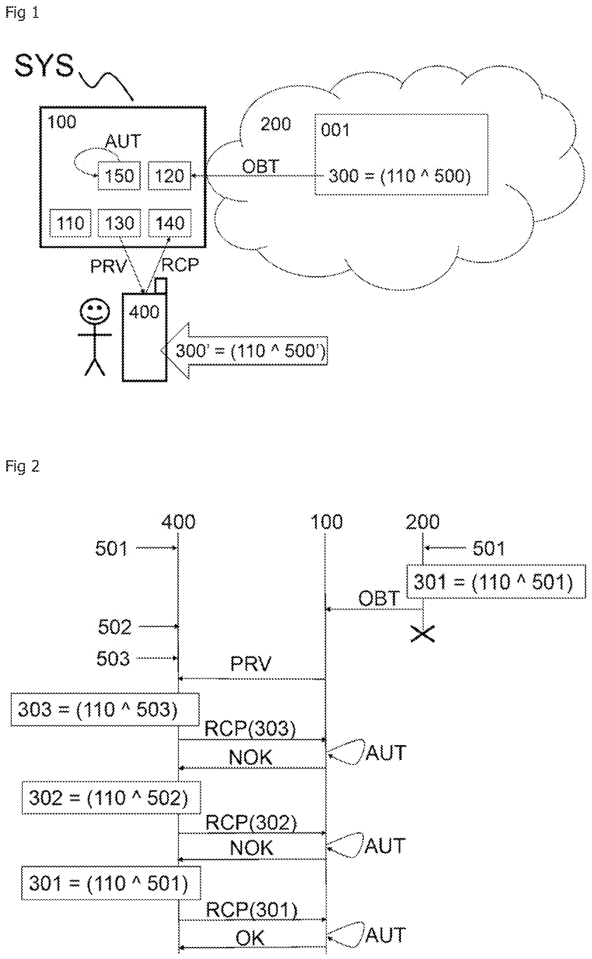

La figure 1 représente un système informatique SYS incluant un équipement 100. Cet équipement pourra être par exemple un routeur ou un équipement SDH ou bien un équipement d'une station de base dans le domaine des télécommunications. Dans d'autres domaines techniques, l'équipement pourra être par exemple un équipement de distribution électrique ou bien d'assainissement des eaux.

Même si l'invention peut être réalisée sur un équipement 100 isolé, l'invention trouve tout son intérêt quand l'équipement 100 appartient à un parc d'équipements. Dans ce cas, l'équipement 100 est de préférence muni d'un identifiant unique 110. Cet identifiant unique 110 sera utilisé dans les calculs de mots de passe pour s'assurer que les équipements 100 obtiennent leur propre mot de passe. L'invention assure alors que les mots de passe des équipements 100 sont diversifiés au sein du parc d'équipements. Dans la description qui suit, nous nous plaçons systématiquement dans le cas où l'équipement 100 appartient à un parc d'équipements et est muni d'un identifiant 110.

L'équipement 100 présente l'architecture matérielle d'un ordinateur conventionnel. Il comporte notamment un processeur, une mémoire vive de type RAM et une mémoire morte telle qu'une mémoire de type Flash, ROM, (non représentés sur la figure) ainsi que des dispositifs d'entrée-sortie tels que claviers et/ou écrans (non représentés sur la figure).

L'équipement 100 dispose d'un identifiant 110. Dans notre exemple, comme l'équipement 100 fait partie d'un parc d'équipements, cet identifiant 110 est de préférence unique pour chaque équipement au sein du parc. L'identifiant 110 va être typiquement une suite de caractères alphanumériques, d'une longueur suffisante, qui pourra être utilisé en argument d'une fonction cryptographique.

Dans notre exemple, le système SYS inclut un serveur 001 qui est relié à l'équipement 100 par un réseau de communication 200. On verra plus tard que la présence d'un serveur n'est pas obligatoire dans tous les modes de réalisation de l'invention. Le serveur 001 peut réaliser le calcul d'un mot de passe 300 à partir de l'identifiant 110 et d'une donnée secrète 500. Le mot de passe 300 peut ensuite être transmis via un réseau de communication 200 à l'équipement 100. On verra également plus tard que des modes de réalisation de l'invention peuvent fonctionner sans réseau de communication 200 et en tout cas que l'invention résiste aux pannes du réseau.

L'équipement 100 obtient le mot de passe 300 grâce à un module d'obtention 120. Ce module d'obtention 120 peut être formé par exemple d'un système permettant de recevoir des messages portés par le réseau de communication 200, composé d'une antenne et d'un récepteur de communications sans fil 2G jusqu'à 5G, mais toute autre manière de fournir à l'équipement 100 un mot de passe 300 peut être considérée.

L'équipement 100 comprend un module d'authentification 150 apte à réaliser une authentification. Ce module d'authentification 150 réalise une authentification standard par mot de passe. Le mot de passe 300 obtenu via le module d'obtention 120 est stocké par le module d'authentification 150 sous une forme protégée, par exemple comme résultat du calcul d'une fonction de hachage. Le mot de passe 300 sera ensuite celui qui devra être présenté pour s'authentifier sur l'équipement 100.

Le système SYS inclut un dispositif de traitement de données 400 qui présente l'architecture matérielle d'un ordinateur conventionnel. Le dispositif comporte notamment un processeur, une mémoire vive de type RAM et une mémoire morte telle qu'une mémoire de type Flash, ROM, (non représentés sur la figure) ainsi que des dispositifs d'entrée-sortie tels que claviers et/ou écrans (non représentés sur la figure), tactiles ou non, réels ou virtuels. Ce dispositif 400 va être par exemple un ordinateur portable, ou bien une tablette tactile, ou bien un ordiphone.

L'équipement 100 dispose d'un module de fourniture 130 qui va lui permettre de fournir l'identifiant 110 au dispositif 400. On peut envisager plusieurs moyens pour que l'équipement 100 fournisse son identifiant 110 au dispositif 400. Par exemple, la fourniture peut utiliser une connexion Bluetooth. Une autre manière de réaliser cette étape peut être en affichant l'identifiant sous forme d'un QR Code. Si le dispositif 400 de l'utilisateur est un ordiphone doté d'un appareil photo, il pourra alors le lire directement. Dans un mode minimal, l'identifiant 110 de l'équipement 100 sera affiché sur une étiquette visible de l'utilisateur, sous forme d'une chaîne de caractères alphanumériques, et sera ensuite rentré par l'utilisateur dans le dispositif 400 grâce à un clavier réel ou virtuel.

Le dispositif 400 comprend un module de réception (non représenté sur la figure 1) qui lui permet de recevoir l'identifiant 110.

Le dispositif 400 comprend également un module de calcul (non représenté sur la figure 1) qui lui permet de calculer le mot de passe 300' à partir de l'identifiant 110 et d'une donnée secrète 500'.

Le dispositif 400 comprend également un module de transmission (non représenté sur la figure 1) qui lui permet de transmettre le mot de passe 300' à l'équipement 100.

l'équipement 100 comprend en outre un module de réception 140 apte à recevoir des données transmises par le module de transmission du dispositif 400.

l'équipement 100 communique avec le serveur 001 au travers d'une première liaison de communication 200. Cette première liaison est indifféremment un réseau de télécommunication tel que le réseau Internet.

L'équipement 100 et le dispositif 400 communiquent entre eux au travers d'une deuxième liaison de communication de courte portée (non représentée sur la figure 1) telle qu'une liaison Bluetooth, RFiD, etc.

En variante, les deux liaisons citées ci-dessus pourraient être une même liaison de communication.

L'invention nécessite que soit disponible une donnée secrète 500. La donnée secrète 500 sera aussi typiquement une suite de caractères alphanumériques d'une longueur suffisante, de même que l'identifiant 110. En général, la donnée secrète 500 prendra une suite de valeurs différentes dans le temps, mais ce n'est pas indispensable à la réalisation de l'invention. Dans la figure 1, une seule valeur de la donnée secrète 500 est représentée ce qui simplifie la présentation d'un exemple de réalisation de l'invention.

A partir de l'identifiant 110 et de la donnée secrète 500, il est possible de calculer un mot de passe 300. Comme cela sera expliqué ci-dessous, en référence à un mode de réalisation particulier de l'invention, le calcul qui produit le mot de passe sera typiquement l'application d'une fonction cryptographique à une combinaison de l'identifiant 110 et de la donnée secrète 500. Dans la figure 1, l'opération de calcul est représentée par le symbole ^. L'opération de calcul ne se limite pas nécessairement à une fonction cryptographique, mais peut être toute opération déterministe qui donnera le même résultat pour des arguments identiques.

Sur la figure 1, le calcul du mot de passe 300 est réalisé par le serveur 001. L'équipement 100 obtient, lors d'une étape OBT, le mot de passe 300 grâce au module d'obtention 120 décrit ci-dessus.

Une fois obtenu par l'équipement 100, le mot de passe 300 est sauvegardé par le module d'authentification 150. Ce module d'authentification 150 réalise une authentification standard par mot de passe. Le mot de passe 300 obtenu via le module d'obtention 120 est stocké par le module d'authentification 150 sous une forme protégée, par exemple comme résultat du calcul d'une fonction de hachage.

Toujours sur la figure 1, l'utilisateur qui va chercher à s'authentifier sur l'équipement 100 est présenté. L'utilisateur est muni d'un dispositif 400. Dans notre exemple, l'équipement 100 fournit, lors d'une étape référencée PRV, son identifiant 110 au dispositif 400.

Après avoir reçu l'identifiant 110, le dispositif 400 peut réaliser le même calcul du mot de passe 300'. Cette opération est référencée dans la figure 1 par la flèche étiquetée avec l'opération de calcul qui fournit le mot de passe 300'. Cette opération est réalisée par un module de calcul (non représenté sur la figure 1) du dispositif 400.

Le dispositif 400 doit utiliser la même opération de calcul que celle utilisée préalablement pour que l'équipement 100 obtienne le mot de passe 300, par exemple une fonction cryptographique comme on le verra ultérieurement. Là encore, l'opération de calcul est représentée dans la figure 1 par le symbole ^. Le dispositif utilise également une donnée secrète 500'. Si cette donnée secrète 500' est identique à celle utilisée par l'équipement 100 pour obtenir son mot de passe, le mot de passe 300' calculé par le dispositif 400 de l'utilisateur sera égal au mot de passe 300 obtenu par l'équipement 100.

On trouve ici un avantage de l'invention, à savoir sa praticité. L'utilisateur n'a pas à mémoriser un mot de passe diversifié pour tous les équipements du parc. C'est le dispositif 400 dont dispose l'utilisateur qui réalise le calcul qui va lui permettre de connaître le mot de passe 300. Ce mot de passe peut être diversifié, car il est calculé à partir de l'identifiant 110 de l'équipement, qui est différent pour tous les équipements du parc. Ce mot de passe est également accessible uniquement aux utilisateurs légitimes, qui disposent du dispositif 400 qui a accès à la donnée secrète 500'. Un attaquant ne pourra pas calculer le mot de passe 300 uniquement à partir de l'identifiant 110 de l'équipement 100, sans accès au dispositif 400 et à la donnée secrète 500 si l'opération de calcul présente de bonnes propriétés cryptographiques.

Une fois le calcul effectué par le dispositif 400, l'équipement 100 va recevoir le mot de passe 300', lors d'une étape RCP, par exemple en utilisant une connexion réseau ou bien une connexion Bluetooth. Dans un mode minimal, c'est l'utilisateur qui transmettra le mot de passe à l'équipement 100, en lisant le résultat du calcul sur son dispositif 400, et en entrant le mot de passe 300' via un clavier attaché à l'équipement 100 ou par tout autre moyen.

L'équipement 100 authentifie ainsi l'utilisateur du dispositif 400. L'opération d'authentification est référencée dans la figure 1 par la flèche AUT. Cette opération est effectuée par le module d'authentification 150. L'authentification réussit si le mot de passe 300' calculé par le dispositif 400 de l'utilisateur et reçu par le module de réception 140 de l'équipement 100 est le même que celui obtenu préalablement par le module d'obtention 120 de l'équipement 100. Pour cela, comme l'identifiant 110 de l'équipement 100 utilisé dans les deux calculs est le même, il faut que la donnée secrète 500' utilisée dans le calcul effectué par le dispositif 400 soit égale à la donnée secrète 500 utilisée dans le calcul effectué par le serveur 001.

L'authentification est réalisée par le module d'authentification 150. Celui-ci réalise une authentification standard par mot de passe.

La figure 2, quant à elle, présente un mode de réalisation incluant une succession d'étapes nécessaires pour réaliser une authentification, en prenant en compte une variabilité de la donnée secrète et une possibilité de pannes du réseau de communication 200.

En effet, pour améliorer la sécurité de l'invention, il est préférable que la valeur de la donnée secrète varie dans le temps. De cette manière, un attaquant qui aurait connaissance à un moment d'une valeur de la donnée secrète ne pourrait pas disposer en permanence des mots de passe des équipements. Dans la figure 2, des valeurs successives de la donnée secrète sont notées 501, 502 et 503.

La première valeur 501 de la donnée secrète sert à calculer une première valeur 301 du mot de passe. Cette valeur 301 est fournie à l'équipement 100 via le réseau de communication 200. On suppose ensuite une panne du réseau de communication 200 symbolisée dans la figure 2 par la croix qui interrompt la ligne 200.

Dans notre exemple, le dispositif 400 reçoit ensuite les valeurs successives prévues 501, 502 et 503 de la donnée secrète pour être synchrone avec la valeur de la donnée secrète utilisée pour fournir à l'équipement 100 son mot de passe. La panne du réseau de communication 200 ayant empêché l'équipement 100 de recevoir les valeurs prévues 502 et 503, on verra que le mode de réalisation de l'invention permet de préserver une authentification même en cas de panne du réseau de communication.

Lorsque l'utilisateur du dispositif 400 souhaite s'authentifier sur l'équipement 100, celui-ci fournit au dispositif 400 l'identifiant 110 comme expliqué précédemment, lors d'une étape de fourniture référencée PRV. Le dispositif 400 va effectuer le calcul du mot de passe à partir de la valeur courante 503 de la donnée secrète et obtenir la valeur 303.

Comme sur la figure 1, l'équipement 100 reçoit, lors d'une étape de réception référencée RCP(303), le mot de passe 303 qui vient d'être calculé par le dispositif. On indique entre parenthèses la valeur 303 du mot de passe reçu par l'équipement 100 lors de l'opération de réception. Comme cette valeur est différente de la valeur 301 obtenue préalablement par l'équipement 100, le module d'authentification 150 (non représenté dans la figure 2) de l'équipement 100 va refuser l'authentification de l'utilisateur du dispositif 400. Ceci est indiqué dans la figure 2 par la transmission par l'équipement 100 à destination du dispositif 400 d'une réponse NOK.

Selon un mode de réalisation de l'invention, le dispositif 400 mémorise l'ensemble des valeurs prises au cours du temps par la donnée secrète. Le dispositif peut chercher à retrouver quelle valeur a été utilisée en dernier pour calculer un mot de passe fourni à l'équipement 100 si les périodes de panne du réseau de communication 200 sont connues du dispositif 400. La figure 2 présente un moyen plus simple de réaliser l'authentification en présence de pannes du réseau de communication 200. Le dispositif 400 après l'échec de l'authentification avec le mot de passe 303 calculé avec la valeur 503 de la donnée secrète va remonter dans le temps les valeurs obtenues jusqu'à réussir l'authentification. Dans l'exemple de la figure 2, après avoir reçu une réponse NOK, l'utilisateur va soumettre ensuite le mot de passe 302 calculé avec la valeur 502 de la donnée secrète, ce qui va échouer, puis le mot de passe 301 calculé avec la valeur 501 de la donnée secrète. Ces opérations sont référencées respectivement dans la figure 2 par les flèches RCP(302) et RCP(301) qui indiquent les valeurs successives 302 et 301 de mots de passe reçues par l'équipement 100. La valeur 301 lui permet de réussir l'authentification, ce qui est indiqué dans la figure 2 par la réponse référencée OK de l'équipement 100 au dispositif 400, car c'est cette valeur 301 du mot de passe qui a été obtenue par l'équipement 100 avant la panne du réseau de communication 200.

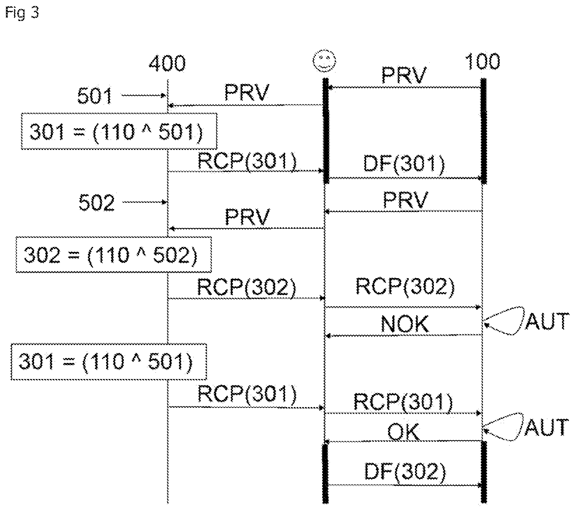

Selon un autre mode de réalisation de l'invention, représenté par la figure 3, l'invention peut être mise en œuvre sans serveur supplémentaire en plus de l'équipement 100 et du dispositif 400, ni sans aucune connexion de l'équipement 100 avec un réseau de communication 200.

Dans ce mode de réalisation, l'utilisateur (représenté dans la figure 3 par une émoticône) est un technicien de maintenance de l'équipement 100. A ce titre, l'utilisateur a la possibilité d'accéder à des opérations de maintenance de l'équipement 100 lorsqu'il a réussi à s'authentifier sur celui-ci. On représente dans la figure 3 que l'utilisateur est authentifié sur l'équipement 100 par des traits épais, parallèles entre l'utilisateur et l'équipement 100.

Initialement, l'utilisateur est authentifié sur l'équipement 100 lors de la phase de mise en marche de l'équipement 100. Dans la figure 3, l'étape PRV est réalisée par l'intermédiaire de l'utilisateur et séparée en deux flèches. L'utilisateur peut lire l'identifiant 110 de l'équipement 100, par exemple sur une étiquette dédiée, et ensuite le transmettre à son dispositif 400, par exemple via un clavier réel ou virtuel, ce qui est référencé sur la figure 3 par deux flèches PRV. Il est également possible que l'équipement 100 fournisse directement l'identifiant 110 au module de réception du dispositif 400 par une connexion Bluetooth, ou par un mécanisme de QR Code.

Le dispositif 400 dispose également d'une valeur 501 de la donnée secrète. Cette valeur peut être par exemple la valeur initiale d'une suite aléatoire de valeurs possibles qui a été prédéterminée. Cette valeur peut également être définie à partir d'un mode de calcul prédéterminé à partir de la date du jour.

Comme précédemment, le dispositif 400 calcule tout d'abord la valeur 301 du mot de passe à partir de l'identifiant 110, fourni par l'équipement 100 lors d'une étape PRV, et de la valeur 501 de la donnée secrète. Le dispositif affiche cette valeur 301 à l'utilisateur par le biais d'un écran. On considère que l'utilisateur reçoit cette valeur du mot de passe dans une opération de réception référencée RCP(301). L'utilisateur va alors définir le mot de passe de l'équipement 100 comme prenant la valeur 301. Cette opération de définition du mot de passe est référencée dans la figure 3 par la flèche DF(301). Cette opération de définition du mot de passe n'est accessible à l'utilisateur que lorsqu'il est authentifié sur l'équipement 100, ce qui est le cas dans cette phase de mise en marche. Cette opération de définition du mot de passe de l'équipement 100 est une parmi les opérations de maintenance de l'équipement 100 accessibles uniquement aux utilisateurs ayant réussi une phase d'authentification sur l'équipement 100.

Dans notre exemple, l'utilisateur va ensuite se déconnecter naturellement de l'équipement 100.

Sur la figure 3, dans notre exemple, des traits simples (non épais), parallèles entre l'utilisateur et l'équipement 100 montrent que l'utilisateur n'est plus authentifié sur l'équipement.

La valeur de la donnée secrète variant dans le temps, celle-ci va prendre de nouvelles valeurs.

Sur la figure 3, on représente seulement une seule nouvelle valeur 502 de la donnée secrète.

Quand l'utilisateur veut de nouveau s'authentifier sur l'équipement 100, il va d'abord fournir au dispositif 400 l'identifiant 110 de l'équipement 100, comme précédemment, lors d'une étape PRV. Dans la figure 3, l'étape PRV est réalisée par l'intermédiaire de l'utilisateur et séparée en deux flèches, et est constituée par exemple de la lecture de l'identifiant 110 sur une étiquette de l'équipement 100 par l'utilisateur suivie par une entrée via un clavier du dispositif 400. On a vu précédemment que cette étape PRV pouvait alternativement être réalisée par une communication directe entre l'équipement 100 et le dispositif 400, par exemple par une liaison Bluetooth ou tout autre moyen.

Une fois la valeur 302 calculée à partir de l'identifiant 110 et de la donnée secrète 502, celle-ci est reçue par l'utilisateur, lors d'une étape RCP(302) qui va ensuite la transmettre à l'équipement 100 dans une opération référencée également RCP(302). On considère dans la figure 3 que l'opération de réception RCP est effectuée par l'intermédiaire de l'utilisateur, qui va par exemple lire la valeur 302 sur l'écran du dispositif 400, puis entrer cette valeur 302 dans l'équipement 100 par l'intermédiaire d'un clavier, ce qui est référencé par les deux flèches RCP(302). Alternativement, l'opération de réception RCP(302) pourrait être effectuée directement entre le dispositif 400 et l'équipement 100 par une liaison Bluetooth ou tout autre moyen.

Une fois la valeur 302 du mot de passe reçu par l'équipement 100, celui-ci va procéder à une opération d'authentification. Cette opération d'authentification est référencée dans la figure 3 par la flèche AUT. Cette opération est effectuée par le module d'authentification 150 (non représenté sur la figure 3) de l'équipement 100. L'opération d'authentification va échouer comme indiqué par la réponse NOK dans la figure 3.

Comme dans le mode de réalisation décrit dans la figure 2, l'utilisateur va solliciter le dispositif 400 pour revenir en arrière et utiliser les valeurs précédentes mémorisées de la donnée secrète. L'authentification va réussir quand l'utilisateur soumettra le mot de passe 301 calculé par le dispositif 400 à partir de l'identifiant 110 et de la valeur 501 de la donnée secrète. L'opération de réception de la valeur 301 du mot de passe par l'équipement 100 est référencée par deux flèches RCP(301) car elle est effectuée de nouveau par l'intermédiaire de l'utilisateur. L'opération RCP(301) peut être alternativement effectuée par une liaison directe entre le dispositif 400 et l'équipement 100.

Une fois que l'utilisateur est authentifié sur l'équipement, ce qui est représenté sur la figure 3 par la réponse OK et par un double trait épais, l'utilisateur peut accéder aux opérations de maintenance de l'équipement 100 accessibles uniquement aux utilisateurs légitimes après le succès d'une phase d'authentification.

Selon un autre mode de réalisation de l'invention décrit ici, l'utilisateur met à jour le mot de passe sur l'équipement 100 en lui donnant la valeur 302. Cette opération de maintenance est symbolisée dans la figure 3 par la flèche DF(302). De cette manière, même si l'équipement 100 n'est pas connecté à un réseau de communication 200, que ce soit suite à une panne ou bien parce qu'un tel réseau n'est pas disponible, l'équipement 100 obtiendra, au fur et à mesure des opérations de maintenance, un mot de passe 300 calculé avec la valeur la plus récente de la donnée secrète 500. De cette manière, la donnée secrète accessible sur le dispositif 400 est synchrone avec la donnée secrète utilisée pour calculer le mot de passe de l'équipement 100.

Selon un autre mode de réalisation, le calcul qui produit le mot de passe sera typiquement l'application d'une fonction cryptographique à une combinaison de l'identifiant 110 et de la donnée secrète 500. Cette fonction cryptographique pourra par exemple être une fonction de hachage, ou bien une fonction de chiffrement symétrique ou asymétrique, combinée ou pas, si nécessaire, avec des fonctions de troncature.

Sur les figures 1, 2 et 3, l'opération de calcul est représentée par le symbole ^. L'opération de calcul prend comme argument l'identifiant 110 et la donnée secrète 500, qui sont typiquement des suites de caractères alphanumériques.

Le mot de passe résultat sera lui aussi typiquement une suite de caractères alphanumériques, d'une longueur suffisante pour que le mot de passe soit robuste, mais pas non plus trop longue si l'équipement n'accepte que des mots de passe d'une taille bornée par une longueur maximale. Quand l'équipement 100 appartient à un parc d'équipements, les identifiants 110 des équipements sont différents entre eux au sein du parc d'équipements, et en vertu des propriétés de la fonction cryptographique utilisée pour effectuer le calcul, le mot de passe 300 obtenu par chaque équipement sera bien unique. On retrouve un avantage important de l'invention, à savoir qu'elle permet d'obtenir des mots de passe diversifiés sur un parc d'équipements. De plus, le mot de passe 300 est calculé à partir d'une donnée secrète 500 et, grâce aux propriétés d'une fonction cryptographique, un attaquant ne peut pas retrouver le mot de passe 300 sans avoir accès à la donnée secrète 500. Ceci est un autre avantage de l'invention.

Signalons enfin ici que, dans le présent texte, le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. **Procédé** de gestion de l'authentification d'un utilisateur d'un dispositif (400) sur un équipement (100), l'équipement étant accédé par mot de passe (300), ledit procédé étant **caractérisé en ce qu'**il comprend les phases suivantes :
une phase d'obtention (OBT) d'un premier mot de passe (300) par l'équipement (100) via un réseau de communication (200), le mot de passe (300) étant le résultat d'un calcul à partir d'une première donnée secrète (500) ;
une phase d'accès de l'utilisateur à l'équipement (100), qui comprend :
∘ une étape de réception (RCP) par l'équipement (100) d'un deuxième mot de passe (300') calculé par le dispositif (400) à partir d'une deuxième donnée secrète (500'), la valeur de la deuxième donnée secrète (500') étant choisie par le dispositif (400), en cas de coupure du réseau de communication (200), selon la durée de la coupure pour correspondre à la valeur utilisée pour calculer le mot de passe (300) obtenu par l'équipement (100) en dernier ;
∘ une étape d'authentification (AUT) de l'utilisateur du dispositif (400) sur l'équipement (100) si le deuxième mot de passe (300') reçu lors de l'étape de réception (RCP) correspond au premier mot de passe (300) obtenu lors de la phase d'obtention (OBT).

2. Procédé de gestion selon la revendication 1, **caractérisé en ce que** la première donnée secrète (500) utilisée lors de la phase d'obtention (OBT) varie dans le temps, et **en ce que** la deuxième donnée secrète (500') est mise à jour sur le dispositif (400) pour être synchrone avec la première donnée secrète (500).

3. Procédé de gestion selon les revendications 1 et 2, **caractérisé en ce que** des valeurs de mot de passe sont reçues successivement par l'équipement (100) jusqu'à ce que l'étape d'authentification (AUT) réussisse.

4. Procédé de gestion selon la revendication 1, **caractérisé en ce que** l'équipement (100) appartient à un parc d'équipements, les équipements disposant d'un identifiant unique (110), et **en ce que** le mot de passe (300) obtenu par l'équipement (100) est calculé par un serveur (001) à partir de l'identifiant unique (110) et d'une donnée secrète (500) en utilisant une fonction cryptographique, et **caractérisé en ce que** la phase d'accès de l'utilisateur à l'équipement (100) comprend une étape préalable de fourniture (PRV) au cours de laquelle l'équipement (100) fournit son identifiant unique (110) au dispositif (400).

5. Procédé d'accès à un équipement (100) par un dispositif (400), ledit équipement (100) nécessitant un mot de passe pour son accès, ledit premier mot de passe (300) ayant été calculé à partir d'une première donnée secrète (500) et obtenu via un réseau de communication (200), ledit procédé d'accès comprenant :
une étape de calcul par le dispositif (400) d'un deuxième mot de passe (300') à partir d'une deuxième donnée secrète (500'), la valeur de la deuxième donnée secrète (500') étant choisie par le dispositif (400), en cas de coupure du réseau de communication (200), selon la durée de la coupure pour correspondre à la valeur utilisée pour calculer le premier mot de passe (300) obtenu par l'équipement (100) en dernier ;
une étape (RCP) de transmission du deuxième mot de passe (300') par le dispositif (400) à l'équipement (100).

6. Procédé d'accès selon la revendication 5, **caractérisé en ce que** la deuxième donnée secrète (500') est mise à jour sur le dispositif (400) au fil du temps pour être synchrone avec la première donnée secrète (500) utilisée par l'équipement (100).

7. Procédé d'accès selon les revendications 5 et 6, **caractérisé en ce que** le dispositif (400) mémorise plusieurs valeurs passées de la deuxième donnée secrète (500'), et **en ce que** le calcul du deuxième mot de passe (300') par le dispositif (400) se base sur l'une de ces valeurs.

8. Procédé d'accès selon la revendication 5, **caractérisé en ce que** l'équipement (100) accédé par le dispositif (400) appartient à un parc d'équipements, les équipements disposant d'un identifiant unique (110) , **en ce que** le premier mot de passe (300) obtenu par l'équipement (100) accédé par le dispositif (400) est calculé par un serveur (001) à partir de l'identifiant unique (110) et d'une première donnée secrète (500) en utilisant une fonction cryptographique, **en ce que** la phase d'accès de l'utilisateur du dispositif (400) à l'équipement (100) comprend une étape préalable de fourniture (PRV) au cours de laquelle l'équipement (100) fournit son identifiant unique (110) au dispositif (400) et **en ce que** le dispositif (400) calcule le deuxième mot de passe (300') à partir de l'identifiant unique (110) et d'une deuxième donnée secrète (500') en utilisant la même fonction cryptographique.

9. Equipement (100) gérant l'authentification d'un utilisateur d'un dispositif (400), l'équipement (100) étant accédé par mot de passe, **caractérisé en ce que** l'équipement comprend :
un module d'obtention (120) d'un premier mot de passe (300) via un réseau de communication (200), le mot de passe étant le résultat d'un calcul à partir d'une première donnée secrète (500) ;
un module de réception (140) apte à recevoir un deuxième mot de passe (300') calculé par le dispositif (400) à partir d'une deuxième donnée secrète (500'), la valeur de la deuxième donnée secrète (500') étant choisie par le dispositif (400), en cas de coupure du réseau de communication (200), selon la durée de la coupure pour correspondre à la valeur utilisée pour calculer le mot de passe (300) obtenu par l'équipement (100) en dernier ;
un module d'authentification (150) apte à authentifier l'utilisateur du dispositif (400) sur l'équipement (100) si le premier mot de passe (300) obtenu correspond au deuxième mot de passe (300') reçu.

10. Equipement (100) selon la revendication 9, **caractérisé en ce que** l'équipement (100) appartient à un parc d'équipement et est muni d'un identifiant unique (110) et **caractérisé en ce que** l'équipement (100) comprend de surcroît un module de fourniture (130) apte à fournir l'identifiant unique (110) au dispositif (400).

11. Dispositif (400) permettant l'accès d'un utilisateur sur un équipement (100), ledit équipement (100) nécessitant un mot de passe pour son accès, ledit premier mot de passe (300) ayant été calculé à partir d'une première donnée secrète (500) et obtenu via un réseau de communication (200), ledit dispositif (400) étant **caractérisé en ce qu'**il comprend :
un module de calcul par le dispositif (400) d'un deuxième mot de passe (300') à partir d'une deuxième donnée secrète (500'), la valeur de la deuxième donnée secrète (500') étant choisie par le dispositif (400), en cas de coupure du réseau de communication (200), selon la durée de la coupure pour correspondre à la valeur utilisée pour calculer le premier mot de passe (300) obtenu par l'équipement (100) en dernier ;
un module de transmission du deuxième mot de passe (300') par le dispositif (400) à l'équipement (100).

12. Dispositif (400) selon la revendication 11, **caractérisé en ce que** le dispositif (400) comprend de surcroît un module de réception apte à recevoir un identifiant (110) d'un équipement (100), et **caractérisé en ce que** le module de calcul du dispositif (400) calcule le deuxième mot de passe (300') à partir de l'identifiant (110) et d'une deuxième donnée secrète (500').

13. Programme d'ordinateur apte à être mis en œuvre par un équipement (100), le programme comprenant des instructions de code qui, lorsqu'il est exécuté par un processeur, réalise les étapes du procédé de gestion défini dans la revendication 1.

14. Programme d'ordinateur apte à être mis en œuvre par un dispositif (400), le programme comprenant des instructions de code qui, lorsqu'il est exécuté par un processeur, réalise les étapes du procédé d'accès défini dans la revendication 5.

15. Support de données, sur lequel est enregistré un programme d'ordinateur comprenant une séquence d'instructions pour la mise en œuvre du procédé de gestion conforme à la revendication 1 lorsqu'il est chargé dans et exécuté par un processeur.

16. Support de données, sur lequel est enregistré un programme d'ordinateur comprenant une séquence d'instructions pour la mise en œuvre du procédé d'accès conforme à la revendication 5 lorsqu'il est chargé dans et exécuté par un processeur.

## Patentansprüche

1. Verfahren zur Verwaltung der Authentifizierung eines Benutzers einer Vorrichtung (400) an einem Gerät (100), wobei auf das Gerät durch ein Passwort (300) zugegriffen wird, wobei das Verfahren **dadurch gekennzeichnet ist, dass** es die folgenden Phasen umfasst:
eine Phase des Erhaltens (OBT) eines ersten Passworts (300) durch das Gerät (100) über ein Kommunikationsnetzwerk (200), wobei das Passwort (300) das Ergebnis einer Berechnung aus einem ersten geheimen Datenelement (500) ist;
eine Phase des Zugriffs des Benutzers auf das Gerät (100), welche umfasst:
∘ einen Schritt des Empfangs (RCP), durch das Gerät (100), eines zweiten Passworts (300'), das durch die Vorrichtung (400) aus einem zweiten geheimen Datenelement (500') berechnet wird, wobei der Wert des zweiten geheimen Datenelements (500') durch die Vorrichtung (400) im Falle einer Unterbrechung des Kommunikationsnetzwerks (200) gemäß der Dauer der Unterbrechung so gewählt wird, dass es dem Wert entspricht, der zur Berechnung des Passworts (300) verwendet wird, das von dem Gerät (100) als letztes erhalten wurde;
∘ einen Schritt der Authentifizierung (AUT) des Benutzers der Vorrichtung (400) an dem Gerät (100), falls das während des Empfangsschritts (RCP) empfangene zweite Passwort (300') dem während der Phase des Erhaltens (OBT) erhaltenen ersten Passwort (300) entspricht.

2. Verwaltungsverfahren nach Anspruch 1, **dadurch gekennzeichnet, dass** das erste geheime Datenelement (500), das während der Phase des Erhaltens (OBT) verwendet wird, über die Zeit variiert, und dadurch, dass das zweite geheime Datenelement (500') auf der Vorrichtung (400) aktualisiert wird, damit es mit dem ersten geheimen Datenelement (500) synchron ist.

3. Verwaltungsverfahren nach den Ansprüchen 1 und 2, **dadurch gekennzeichnet, dass** Passwortwerte von dem Gerät (100) nacheinander empfangen werden, bis der Authentifizierungsschritt (AUT) erfolgreich ist.

4. Verwaltungsverfahren nach Anspruch 1, **dadurch gekennzeichnet, dass** das Gerät (100) zu einem Gerätepark gehört, wobei die Geräte über eine eindeutige Kennung (110) verfügen, und dadurch, dass das durch das Gerät (100) erhaltene Passwort (300) durch einen Server (001) aus der eindeutigen Kennung (110) und einem geheimen Datenelement (500) unter Verwendung einer kryptografischen Funktion berechnet wird, und **dadurch gekennzeichnet, dass** die Phase des Zugriffs des Benutzers auf das Gerät (100) einen vorausgehenden Lieferungsschritt (PRV) umfasst, in dem das Gerät (100) seine eindeutige Kennung (110) an die Vorrichtung (400) liefert.

5. Verfahren zum Zugriff auf ein Gerät (100) durch eine Vorrichtung (400), wobei das Gerät (100) ein Passwort für seinen Zugriff benötigt, wobei das erste Passwort (300) aus einem ersten geheimen Datenelement (500) berechnet und über ein Kommunikationsnetzwerk (200) erhalten wurde, wobei das Verfahren zum Zugriff umfasst:
einen Schritt der Berechnung, durch die Vorrichtung (400), eines zweiten Passworts (300') aus einem zweiten geheimen Datenelement (500'), wobei der Wert des zweiten geheimen Datenelements (500') durch die Vorrichtung (400) im Fall einer Unterbrechung des Kommunikationsnetzwerks (200) gemäß der Dauer der Unterbrechung so gewählt wird, dass es dem Wert entspricht, der zur Berechnung des Passworts (300) verwendet wird, das von dem Gerät (100) als letztes erhalten wurde;
einen Schritt (RCP) des Sendens des zweiten Passworts (300') durch die Vorrichtung (400) an das Gerät (100).

6. Verfahren zum Zugriff nach Anspruch 5, **dadurch gekennzeichnet, dass** das zweite geheime Datenelement (500') auf der Vorrichtung (400) im Laufe der Zeit so aktualisiert wird, dass es synchron mit dem von dem Gerät (100) verwendeten ersten geheimen Datenelement (500) ist.

7. Verfahren zum Zugriff nach den Ansprüchen 5 und 6, **dadurch gekennzeichnet, dass** die Vorrichtung (400) mehrere vergangene Werte des zweiten geheimen Datenelements (500') speichert, und dadurch, dass die Berechnung des zweiten Passworts (300') durch die Vorrichtung (400) auf einem dieser Werte basiert.

8. Verfahren zum Zugriff nach Anspruch 5, **dadurch gekennzeichnet, dass** das Gerät (100), auf das durch die Vorrichtung (400) zugegriffen wird, zu einem Gerätepark gehört, wobei die Geräte über eine eindeutige Kennung (110) verfügen, dadurch, dass das erste Passwort (300), das durch das Gerät (100) erhalten wird, auf das durch die Vorrichtung (400) zugegriffen wird, durch einen Server (001) aus der eindeutigen Kennung (110) und einem ersten geheimen Datenelement (500) unter Verwendung einer kryptografischen Funktion berechnet wird, dadurch, dass die Phase des Zugriffs des Benutzers der Vorrichtung (400) auf das Gerät (100) einen vorausgehenden Lieferungsschritt (PRV) umfasst, in dem das Gerät (100) seine eindeutige Kennung (110) an die Vorrichtung (400) liefert, und dadurch, dass die Vorrichtung (400) das zweite Passwort (300') aus der eindeutigen Kennung (110) und aus einem zweiten geheimen Datenelement (500') unter Verwendung derselben kryptografischen Funktion berechnet.

9. Gerät (100), welches die Authentifizierung eines Benutzers einer Vorrichtung (400) verwaltet, wobei auf das Gerät (100) durch ein Passwort zugegriffen wird, **dadurch gekennzeichnet, dass** das Gerät umfasst:
ein Modul zum Erhalten (120) eines ersten Passworts (300) über ein Kommunikationsnetzwerk (200), wobei das Passwort das Ergebnis einer Berechnung aus einem ersten geheimen Datenelement (500) ist;
ein Empfangsmodul (140), das in der Lage ist, ein zweites Passwort (300') zu empfangen, das durch die Vorrichtung (400) aus einem zweiten geheimen Datenelement (500') berechnet wird, wobei der Wert des zweiten geheimen Datenelements (500') durch die Vorrichtung (400) im Fall einer Unterbrechung des Kommunikationsnetzwerks (200) gemäß der Dauer der Unterbrechung so gewählt wird, dass es dem Wert entspricht, der verwendet wird, um das Passwort (300) zu berechnen, das durch das Gerät (100) als letztes erhalten wurde;
ein Authentifizierungsmodul (150), das in der Lage ist, den Benutzer der Vorrichtung (400) an dem Gerät (100) zu authentifizieren, falls das erhaltene erste Passwort (300) dem empfangenen zweiten Passwort (300') entspricht.

10. Gerät (100) nach Anspruch 9, **dadurch gekennzeichnet, dass** das Gerät (100) zu einem Gerätepark gehört und mit einer eindeutigen Kennung (110) versehen ist, und **dadurch gekennzeichnet, dass** das Gerät (100) außerdem ein Liefermodul (130) umfasst, das in der Lage ist, die eindeutige Kennung (110) an die Vorrichtung (400) zu liefern.

11. Vorrichtung (400), welche den Zugriff eines Benutzers auf ein Gerät (100) ermöglicht, wobei das Gerät (100) für seinen Zugriff ein Passwort benötigt, wobei das erste Passwort (300) aus einem ersten geheimen Datenelement (500) berechnet und über ein Kommunikationsnetzwerk (200) erhalten wurde, wobei die Vorrichtung (400) **dadurch gekennzeichnet ist, dass** sie umfasst:
ein Modul zur Berechnung, durch die Vorrichtung (400), eines zweiten Passworts (300') aus einem zweiten geheimen Datenelement (500'), wobei der Wert des zweiten geheimen Datenelements (500') durch die Vorrichtung (400) im Fall einer Unterbrechung des Kommunikationsnetzwerks (200) gemäß der Dauer der Unterbrechung so gewählt wird, dass es dem Wert entspricht, der verwendet wird, um das erste Passwort (300) zu berechnen, das durch das Gerät (100) als letztes erhalten wurde;
ein Modul zum Senden des zweiten Passworts (300') durch die Vorrichtung (400) an das Gerät (100).

12. Vorrichtung (400) nach Anspruch 11, **dadurch gekennzeichnet, dass** die Vorrichtung (400) außerdem ein Empfangsmodul umfasst, das in der Lage ist, eine Kennung (110) eines Geräts (100) zu empfangen, und **dadurch gekennzeichnet, dass** das Berechnungsmodul der Vorrichtung (400) das zweite Passwort (300') aus der Kennung (110) und aus einem zweiten geheimen Datenelement (500') berechnet.

13. Computerprogramm, welches geeignet ist, von einem Gerät (100) ausgeführt zu werden, wobei das Programm Codeanweisungen umfasst, die, wenn es von einem Prozessor ausgeführt wird, die Schritte des in Anspruch 1 definierten Verfahrens zur Verwaltung durchführt.

14. Computerprogramm, welches geeignet ist, von einer Vorrichtung (400) ausgeführt zu werden, wobei das Programm Codeanweisungen umfasst, die, wenn es von einem Prozessor ausgeführt wird, die Schritte des in Anspruch 5 definierten Verfahrens zum Zugriff durchführt.

15. Datenträger, auf dem ein Computerprogramm aufgezeichnet ist, das eine Folge von Anweisungen zur Durchführung des Verfahrens zur Verwaltung nach Anspruch 1, wenn es in einen Prozessor geladen und von ihm ausgeführt wird, umfasst.

16. Datenträger, auf dem ein Computerprogramm aufgezeichnet ist, das eine Folge von Anweisungen zur Durchführung des Verfahrens zum Zugriff nach Anspruch 5, wenn es in einen Prozessor geladen und von ihm ausgeführt wird, umfasst.

## Claims

1. Method for managing the authentication of a user of a device (400) on an equipment (100), with the equipment being accessed by a password (300), said method being **characterized in that** it comprises the following phases:
a phase (OBT) of acquiring a first password (300) by the equipment (100) via a communication network (200), the password (300) being the result of a computation from a first secret datum (500);
a phase of the user accessing the equipment (100), which phase comprises:
∘ a step (RCP) of the equipment (100) receiving a second password (300') computed by the device (400) from a second secret datum (500'), with the value of the second secret datum (500') being selected by the device (400), in the event of an interruption in the communication network (200), according to the duration of the interruption in order to correspond to the value used for computing the password (300) most recently acquired by the equipment (100);
∘ a step (AUT) of authenticating the user of the device (400) on the equipment (100) if the second password (300') received during the receiving step (RCP) corresponds to the first password (300) acquired during the acquisition phase (OBT).

2. Management method according to Claim 1, **characterized in that** the first secret datum (500) used during the acquisition phase (OBT) varies over time, and **in that** the second secret datum (500') is updated on the device (400) in order to be synchronous with the first secret datum (500).

3. Management method according to Claims 1 and 2, **characterized in that** password values are successively received by the equipment (100) until the authentication step (AUT) is successful.

4. Management method according to Claim 1, **characterized in that** the equipment (100) belongs to a pool of equipments, with the equipments having a unique identifier (110), and **in that** the password (300) acquired by the equipment (100) is computed by a server (001) from the unique identifier (110) and from a secret datum (500) using a cryptographic function, and **characterized in that** the phase of the user accessing the equipment (100) comprises a prior provision step (PRV), during which the equipment (100) provides the device (400) with its unique identifier (110).

5. Method for accessing an equipment (100) by a device (400), said equipment (100) requiring a password in order to be accessed, said first password (300) having been computed from a first secret datum (500) and acquired via a communication network (200), said access method comprising:
a step of computing, by the device (400), a second password (300') from a second secret datum (500'), with the value of the second secret datum (500') being selected by the device (400), in the event of an interruption in the communication network (200), according to the duration of the interruption in order to correspond to the value used for computing the first password (300) most recently acquired by the equipment (100);
a step (RCP) of transmitting, by the device (400), the second password (300') to the equipment (100).

6. Access method according to Claim 5, **characterized in that** the second secret datum (500') is updated on the device (400) over time in order to be synchronous with the first secret datum (500) used by the equipment (100).

7. Access method according to Claims 5 and 6, **characterized in that** the device (400) stores several past values of the second secret datum (500'), and **in that** the computation of the second password (300') by the device (400) is based on one of these values.

8. Access method according to Claim 5, **characterized in that** the equipment (100) accessed by the device (400) belongs to a pool of equipments, with the equipments having a unique identifier (110), **in that** the first password (300) acquired by the equipment (100) accessed by the device (400) is computed by a server (001) from the unique identifier (110) and from a first secret datum (500) using a cryptographic function, **in that** the phase of the user of the device (400) accessing the equipment (100) comprises a prior provision step (PRV), during which the equipment (100) provides the device (400) with its unique identifier (110), and **in that** the device (400) computes the second password (300') from the unique identifier (110) and from a second secret datum (500') using the same cryptographic function.

9. Equipment (100) managing the authentication of a user of a device (400), the equipment (100) being accessed by a password, **characterized in that** the equipment comprises:
an acquisition module (120) for acquiring a first password (300) via a communication network (200), the password being the result of a computation from a first secret datum (500);
a reception module (140) able to receive a second password (300') computed by the device (400) from a second secret datum (500'), with the value of the second secret datum (500') being selected by the device (400), in the event of an interruption in the communication network (200), according to the duration of the interruption in order to correspond to the value used for computing the password (300) most recently acquired by the equipment (100);
an authentication module (150) able to authenticate the user of the device (400) on the equipment (100) if the acquired first password (300) corresponds to the received second password (300').

10. Equipment (100) according to Claim 9, **characterized in that** the equipment (100) belongs to a pool of equipment and is provided with a unique identifier (110) and **characterized in that** the equipment (100) further comprises a provision module (130) able to provide the device (400) with the unique identifier (110).

11. Device (400) allowing a user to access an equipment (100), said equipment (100) requiring a password in order to be accessed, said first password (300) having been computed from a first secret datum (500) and acquired via a communication network (200), said device (400) being **characterized in that** it comprises:
a module for computing, by the device (400), a second password (300') from a second secret datum (500'), with the value of the second secret datum (500') being selected by the device (400), in the event of an interruption in the communication network (200), according to the duration of the interruption in order to correspond to the value used for computing the first password (300) most recently acquired by the equipment (100);
a module for transmitting, by the device (400), the second password (300') to the equipment (100).

12. Device (400) according to Claim 11, **characterized in that** the device (400) further comprises a reception module able to receive an identifier (110) of an equipment (100), and **characterized in that** the computing module of the device (400) computes the second password (300') from the identifier (110) and from a second secret datum (500').

13. Computer program able to be implemented by an equipment (100), the program comprising code instructions, and which, when it is executed by a processor, carries out the steps of the management method defined in Claim 1.

14. Computer program able to be implemented by a device (400), the program comprising code instructions, and which, when it is executed by a processor, carries out the steps of the access method defined in Claim 5.

15. Data medium, on which a computer program is recorded comprising a sequence of instructions for implementing the management method according to Claim 1 when it is loaded into and executed by a processor.

16. Data medium, on which a computer program is recorded comprising a sequence of instructions for implementing the access method according to Claim 5 when it is loaded into and executed by a processor.
